# EUROPEAN PATENT APPLICATION

(11) **EP 2 757 178 A1**
(43) Date of publication of application: **23.07.2014**
(21) Application number: 14151501.5
(22) Date of filing: 16.01.2014
(51) Int. Cl.: C25B 15/08, C25B 1/04, C25B 11/02, C25B 15/00

(54) **Oxyhydrogen generator**

(30) Priority: 17.01.2013 IT PR20130004
(71) Applicant: G.F. S.p.A., 43040 Solignano (Parma) (IT); Badini, Angelo, 00118 Roma (IT)
(72) Inventor: BADINI, Angelo, 00118 ROMA (IT)
(74) Representative: Monelli, Alberto

(57) **Abstract**

An oxyhydrogen generator comprising an oxyhydrogen production cell (2) by electrolysis, in turn comprising:
-a plurality of electrically conducting plates (21), arranged in a row and mutually spaced out; a first part (22) interposed between two plates (21) alongside one another being occupied by an electrolytic solution (23);
-a positive pole (24) and a negative pole (25) connected to two distinct plates of said plurality of plates (21);

At least a first plate (211) of said plurality of plates (21) comprises a groove (3) that affects one face of said first plate (211) and affects said first plate (211) without crossing it from one side to the other across the whole thickness.

## Description

The present invention relates to an oxyhydrogen generator. An oxyhydrogen generator comprising an electrolytic cell is known. The electrolytic cell comprises a plurality of plates spaced out by gaskets and between which an electrolytic liquid is present.

The first and the last of said plates are connected to a positive electrical pole and a negative electrical pole respectively.

The electrolytic cell is fed with water which generates oxyhydrogen by electrolysis.

In this context, the technical task on which the present invention is based is to propose an oxyhydrogen generator that allows a higher yield to be obtained. The technical task set and the objects specified are substantially attained by an oxyhydrogen generator, comprising the technical characteristics as set out in one or more of the accompanying claims. Further characteristics and advantages of the present invention will become more apparent from the following indicative, and hence nonlimiting, description of a preferred, but not exclusive, embodiment of an oxyhydrogen generator as illustrated in the appended drawings, in which:
- figure 1 shows a functional view of an oxyhydrogen generator according to the present invention;
- figures 2 and 3 show views of two distinct components of the oxyhydrogen generator according to the present invention;
- figure 4 shows an alternative embodiment of the component of figure 3.

In the accompanying drawings, number 1 indicates an oxyhydrogen generator. The generator 1 comprises an oxyhydrogen production cell 2 by electrolysis. The cell 2 comprises a plurality of electrically conducting plates 21, arranged in a row and mutually spaced out. The plates are packed and could be held together by tie-rods that cross the plates 21 or by other retaining systems. A first part 22 of an area interposed between two adjacent plates is occupied by an electrolytic solution 23 (for example such electrolytic solution mainly comprises distilled water and an agent that acts as an electrolyte, for example sodium hydroxide. Potassium hydroxide or sulphuric acid can also be used as electrolytes). In the first part 22 the electrolytic solution facilitates the electrical conductivity between two plates. A second part 26 of the area interposed between the two plates is occupied by water vapour and oxyhydrogen generated by electrolysis by the cell 2. The presence of water vapour enables electrical conductivity also in said second part 26; consequently also in this area of the cell there is partial electrolysis of the water vapour into oxyhydrogen. The first part 22 is below the second part 26. Typically the plates 21 are made of metal material, typically steel. Preferably the plates 21 are parallel to one other.

Appropriately a gasket is interposed between one plate and another, made of electrically insulating material which in combination with the plates delimits a housing area of the electrolytic solution. Preferably the thickness of the gasket is less than 2 millimetres, preferably less than 1 millimetre; in the preferred embodiment it is equal to about 0.6 millimetres. The thickness of the gasket allows one of the two adjacent plates to be spaced out from the other.

The generator 1 further comprises a positive electrical pole 24 and a negative electrical pole 25 connected to two distinct plates of said plurality of plates 21. Appropriately the positive pole 24 and the negative pole 25 are connected to two plates that lie at the opposite ends of said row of plates. Interposed between the plates that lie at the opposite ends of said row, one or more intermediate plates are usually present, which act as the armature of a condenser. There will therefore be an accumulation of positive and negative loads respectively on two opposite faces of each plate. The generator 1 may comprise a plurality of cells 2 arranged in parallel. In that case the generator could comprise a pair of positive or negative poles for every cell 2.

The generator 1 may further comprise inversion means of the polarity of the positive pole and the negative pole. This detail allows the lifetime of the plates 21 to be increased. In fact, prolonged operation of the generator 1 causes localised erosion of the plates themselves. The polarity inversion allows the areas of the plate where the localised erosion is concentrated to be changed.

Advantageously, at least a first plate 211 of said plurality of plates 21 comprises a groove 3 that affects one face of said first plate 211 and affects said first plate 211 without crossing it from one side to the other across the whole thickness.

Due to the geometry, there is a concentration of loads along the groove 3 determining an area in which the electric field is particularly intense and therefore an area where the electrolysis will be higher. At the part of the groove 3 in contact with the electrolytic solution in the liquid state the formation of oxyhydrogen will therefore be higher.

Advantageously all the plates 21 comprise said groove 3. Preferably all the plates 21 are the same as each other. The plates 21 are interposed between a first and a second imaginary plane developing parallel to the plates themselves. All the plates comprise a first face that faces the first plane and a second face that faces the second plane. Preferably the groove 3 affects all the first faces of said plates 21. Appropriately the groove 3 does not affect the second faces of said plates 21.

In the preferred embodiment the groove 3, in an orthogonal section to the line of development of the groove itself, comprises two converging walls (for example like the letter "V").

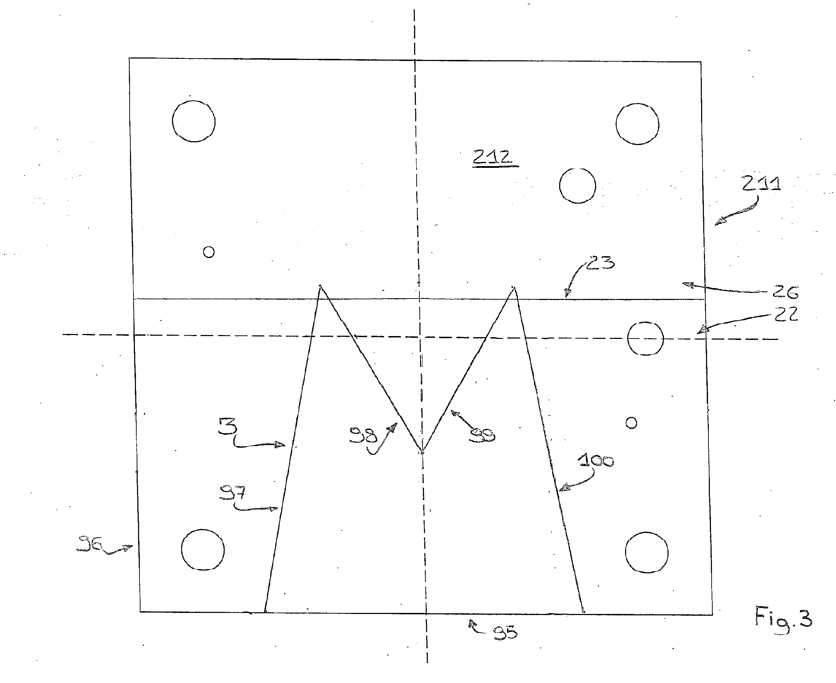

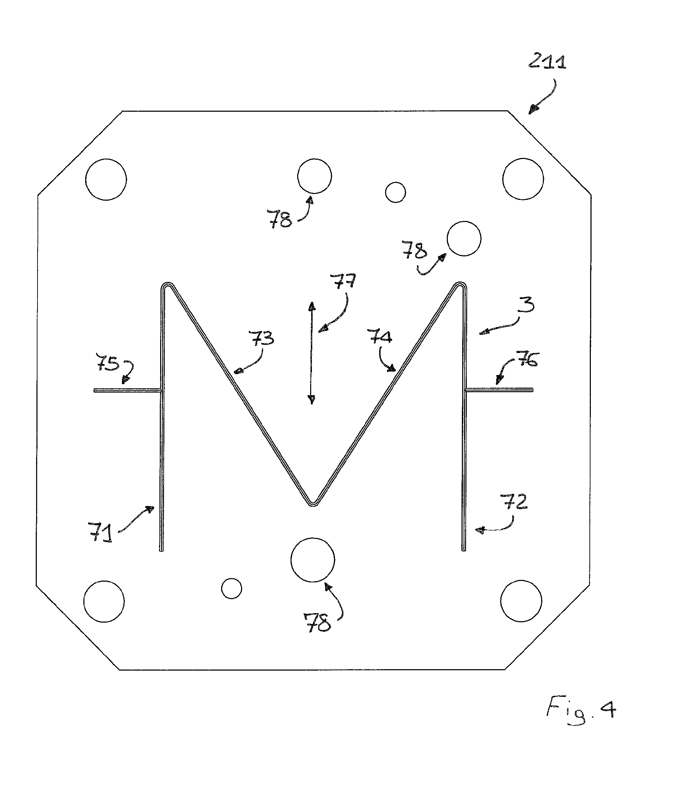

The groove 3 develops linearly drawing a symmetrical shape. Preferably the groove 3 defines a continuous line without interruptions (see figure 3 or 4).

The groove 3 appropriately draws a continuous line comprising at least two converging sections (see figure 3 or 4).

In a preferred embodiment the groove 3 develops linearly on the face of said first plate 211 drawing the letter "M" (see figure 3).

Preferably on one face of the first plate 211 the groove 211 is afforded, whereas the opposite face is planar. Along the groove 3 the first plate 211 has a lower thickness (because of the thinning determined by the actual presence of the groove 3).

The first plate 211 appropriately comprises a first and a second side 95, 96 which are consecutive (preferably orthogonal, appropriately the first slab 211 is rectangular or square). The groove 3 comprises a first section 97 in which moving away from the first side 95 also makes the second side 96 move away (in an alternative embodiment the first section 97 could be substantially parallel to the second side 96, in which case even when moving away from the first side 95 such first section remains at the same distance from the second side 96).

Appropriately the groove 3 comprises:
- a second section 98 consecutive to the first section 97 in which moving towards the first side 95 makes the second side 96 move away;
- a third section 99 consecutive to the second section 98 in which moving away from the first side 95 makes the second side 96 move away;
- a fourth section 100 consecutive to the third section 99 in which moving towards the first side 95 makes the second side 96 move away (in an alternative embodiment the fourth section 100 could be substantially parallel to the second side 96, in which case even when moving towards the first side 95 such fourth section 100 remains at the same distance from the second side 96).

Alternatively to the solution of figure 3 the first and fourth section 97, 100 are substantially parallel. The legs of the letter "M" could therefore be reciprocally parallel (see for example figure 4).

Appropriately in the first plate 211 there is only one M-shaped groove 3. Appropriately the M comprises two legs 71, 72 and two converging sections 73, 74 that each develop from a corresponding leg 71, 72 which mutually meet. Appropriately the groove 3 which defines the letter M comprises two lateral wings 75, 76 which, from the corresponding legs 71, 72 of the letter M, develop towards the outside of the letter M.

Appropriately the M defined by such groove 3 develops upwards along a first direction 77. The height of the M is comprised between 1/3 and 1/2 of the distance, measured along the first direction 77 between two opposite sides of the perimeter of the first plate 211. Appropriately the letter M has a height comprised between 7 and 9 centimetres.

Appropriately the two converging sections 73, 74 form an angle comprised between 35 and 55 degrees with the corresponding leg 71, 72 from which they develop. The orthogonal projection of the two converging sections 73, 74 on said legs 71, 72 affects more than 2/3 of the height of the legs 71, 72.

Appropriately the first plate 221 comprises a plurality of holes 78. Advantageously the holes 78 are through holes. Advantageously one of said holes 78 is positioned below the M, one above the M and one has its own centre lying on an extension of one of the legs of the M. Appropriately the diameter of one or more of such holes 78 is comprised between 5 and 13 millimetres.

The inventor reports that advantageously, but not limitatively, the M and the holes 78 of various dimensions indicated above ensure that the current is not uniform in the plate itself, but that the effect of the tips of the M is exploited as well as the fact that such incision and holes create a path with a variable resistance that determines a variable current in the various areas of the plate. This has the effect of creating a variable electromagnetic field which determines resonance phenomena of the water molecules contributing further to the breakage of the molecules themselves (and therefore increasing the production of oxyhydrogen). Since the resonance of the water molecules varies as the temperature and the geometry of the molecules themselves vary, the probability of obtaining a resonance condition is optimised which causes the breakage of the water molecules and increases the production of oxyhydrogen. The M-shaped groove only affects one face of the first plate 211 (appropriately the opposite face is smooth). In any case the distribution of the loads in the first plate 211 makes its effects be felt on the liquid that laps both faces of the first plate.

Appropriately the generator 1 comprises a potentiometer which allows the electrical power to be regulated and the consequent production of oxyhydrogen to be regulated.

The generator 1 further comprises a scrubber 4 positioned downstream of said cell 2. Such scrubber 4 allows the oxyhydrogen to be separated from the water vapour, but also to prevent a return of the oxyhydrogen into the cell 2. It therefore defines a safety device which acts as a flashback prevention device.

Appropriately the generator 1 comprises a first conduit 41 that connects the cell 2 and the scrubber 4 for introducing into the scrubber 4 a mixture of oxyhydrogen and vapour, said vapour being able to be at least partially condensed in water. Along the first conduit 41 the generator 1 advantageously comprises a condenser 93 which determines a cooling of the fluid which runs along the first conduit 41. This determines at least the partial condensation of the water vapour promoting the separation in the scrubber 4 of the water vapour from the oxyhydrogen.

Appropriately the generator 1 comprises an outlet conduit 42 of oxyhydrogen from the scrubber 4. This outlet conduit 42 therefore makes the oxyhydrogen produced by the generator 1 available. The generator 1 can further comprise connection means 81 of the cell 2 with a water inlet door into the generator 1 or a water tank 82 being part of the generator; the connection means 81 fluid dynamically connect the cell 2 with said door or said tank 82 without necessarily transiting through the scrubber 4. The presence of an inlet door is used for example to connect the generator 1 directly to a water mains (appropriately equipped with a water softening system).

The generator 1 further comprises a water recovery conduit 43 which from the scrubber 4 allows the reintroduction of water into said cell 2.

The scrubber 4 in turn comprises:
i) a level sensor 431 which once a predetermined level threshold is reached, activates a recovery pump 432 for the water located along said recovery conduit 43 so as to send back into the cell 2 a part of the water present in the scrubber;
ii) a conduit 46 made of electrically insulating material that connects said sensor 431 to a first compartment 48 within the scrubber 4.

The recovery conduit 43 reintroduces the water recovered by the scrubber 4 into said connection means 81.

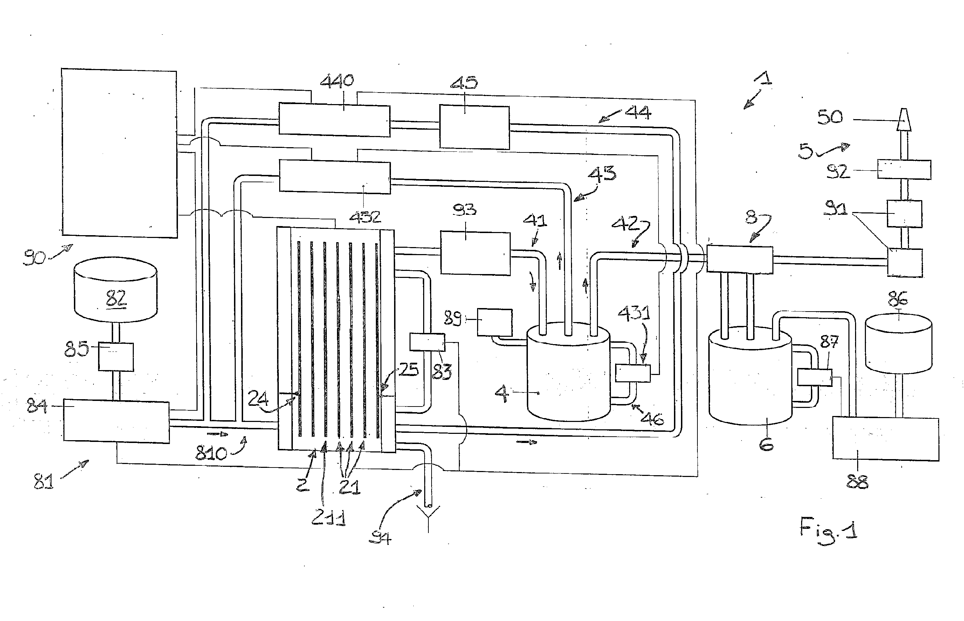

Figure 1 further indicates a safety valve 89 of the scrubber 4 which when a predetermined pressure is exceeded allows the gas present in the scrubber 4 to be vented.

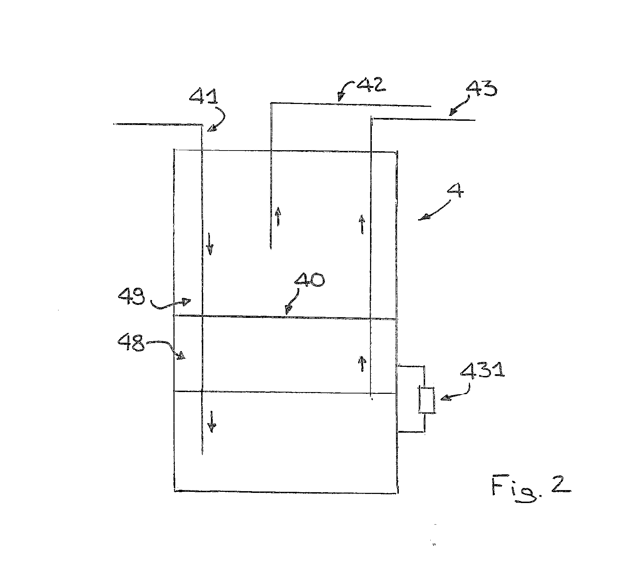

Advantageously the scrubber 4 comprises (see figure 2):
- a second compartment 49 positioned above the first compartment 48;
- a perforated wall 40 that separates the first and the second compartment 48,49. The water introduced into the scrubber 4 from the first conduit 41 is deposited by gravity on the bottom of the scrubber 4 i.e. into the first compartment 48 while the oxyhydrogen is positioned above the water deposited in the first compartment 48. Appropriately the first conduit 41 leads into the scrubber 4 below the surface of the water in the first compartment 48 (see figure 2). This prevents the return of oxyhydrogen from the scrubber 4 into the cell 2.

Appropriately the outlet conduit 42 of the oxyhydrogen develops starting from the second compartment 49. The first conduit 41, the recovery conduit 43 and the conduit 46 made of electrically insulating material lead into the first compartment 48.

The scrubber 4 is advantageously cylindrical. It is typically made of metal. It is split into three sections:
- a lower section which at the top part has a circular plate of the same internal diameter as the cylinder of the scrubber, perforated in three areas: a first area which allows the exit of the oxyhydrogen and the other two for the passage of maximum and minimum level probes (for indications on the water level in such lower section);
- an upper section filled with metal mesh and which advantageously allows flashback to be prevented;
- an intermediate section between the lower section and the upper section; such intermediate section is equipped for the collection of oxyhydrogen.

Appropriately the generator 1 comprises a dispenser 50 of the gas produced by the generator 1. The dispenser 50 defines an end portion of the outlet conduit 42. For example the dispenser 50 comprises a small pipe 5.

Appropriately the generator 1 comprises a tank 6 for adding an additive to the oxyhydrogen. For example such an additive could have explosion prevention properties or however stabilise the temperature of the flame at a predetermined value below that of pure oxyhydrogen (such predetermined value is according to the percentage of additive contained in the gas mixture sent to the user). Typically such additive tank 6 allows the addition of dimethyl ketone. This additive therefore comprises dimethyl ketone. The tank 6 can comprise a bath of dimethyl ketone and water into which the oxyhydrogen is bubbled.

The tank 6 comprises a level sensor 87 which regulates the introduction into said tank 6 of the additive stored in an accumulator 86. On this point the level sensor 87 works on a pump 88 for feeding the additive into said tank 6.

The tank 6 is downstream of the scrubber 4 and upstream of the dispenser 50. In particular, the outlet conduit 42 comprises a valve 8 which in a first configuration directs the gas coming from the scrubber 4 towards the dispenser 50 and in a second configuration it directs it into said tank 6. In fact, according to the applications, the addition of said additive may be required or not.

Appropriately inside the tank 6 there may be a sintered bronze filter that prevents flashback.

The tank 6 further constitutes a cold generator. In fact the applicant has verified that the reaction (the bubbling) of oxyhydrogen with dimethyl ketone and water inside the tank 6 would determine the generation of cold. The tank 6 can therefore define a source of cold to be used in order to determine the cooling of any fluids or components (also external to the generator 1).

Downstream of the additive tank 6 the mixture of oxyhydrogen and additive is sent to said dispenser 50. Appropriately along the outlet conduit 42 there is one or more bleed valves 91 and potentially a pressure gauge 92 to monitor the gas dispensing parameters.

The generator 1 comprises:
- a recirculation conduit 44 that takes the electrolytic solution present in the cell 2 to redirect it towards the cell 2;
- a recirculation pump 440 positioned along said recirculation conduit 44;
- a heat exchanger 45 positioned along said recirculation conduit 44 and that transfers the heat of the electrolytic solution that crosses it. For example, such heat could be used for heating rooms. It further allows a constant working temperature.

The cell 2 further comprises an outlet conduit 94 of the electrolytic solution contained in the cell 2. Such conduit 94 can be obstructed by a specific valve. The outlet conduit 94 allows the complete emptying of the electrolytic solution, a useful operation in the event of maintenance, cleaning, etc.

Appropriately the generator 1 comprises level regulation means 83 of the liquid (electrolytic solution) in the cell 2. For example, such regulation means 83 comprise a loading pump 84.

In the exemplified solution illustrated between the tank 82 and the loading pump 84, a filter 85 is interposed. Appropriately the connection means 81 comprise a loading conduit 810 of the water into the cell 2. The loading pump 84 is positioned along said loading conduit 810. The recovery conduit 43 and/or the recirculation conduit 44 lead into said loading conduit 810 (between the loading pump 84 and the cell 2). Advantageously in figure 1 reference number 90 schematically indicates the electronic control means of the generator 1 (an electronic board). There are many applications of the present generator, for example: casting or welding in the following sectors: jewellery or dentistry or plumbing or building. Further applications could be:
- all domestic/professional environments in which gas is used (such as methane or LPG) from household hobs to domestic/industrial boilers, etc.;
- automobile: in fact, oxyhydrogen could replace fossil fuels allowing complete power supply without the use of traditional fuels;
- various fields of aesthetic medicine: in fact, the applicant contemplates the possibility of using the generator 1 for speeding up the healing of wounds;
- disposal of organic or hospital waste.

The present invention has numerous advantages. First of all, it allows the production of oxyhydrogen to be optimised increasing the production thereof. Further additional advantages are connected with the optimisation of the energy yield with the possibility to exploit the increase in heat of the electrolytic solution which accompanies the generation of oxyhydrogen. A further important advantage is connected with the fact that the scrubber 4 is separate from the tank 82, hence allowing the possibility to precisely regulate the amount of soda inside the aqueous solution of the cell 2.

The invention as conceived is susceptible to numerous modifications and variants, all falling within the scope of the inventive concept characterised thereby. Furthermore all the details can be replaced by other technically equivalent elements. In practice, all the materials used, as well as the dimensions, can be any according to requirements.

## Claims

1. An oxyhydrogen generator comprising an oxyhydrogen production cell (2) by electrolysis, in turn comprising:
- a plurality of electrically conducting plates (21), arranged in a row and mutually spaced out; a first part (22) of an area interposed between two plates (21) alongside one another being occupied by an electrolytic solution (23);
- a positive pole (24) and a negative pole (25) connected to two distinct plates of said plurality of plates (21);
**characterised in that** at least a first plate (211) of said plurality of plates (21) comprises a groove (3) that affects one face of said first plate (211) and affects said first plate (211) without crossing it from one side to the other across the whole thickness.

2. The generator according to claim 1, **characterised in that** said groove (3) develops linearly drawing a symmetrical shape.

3. The generator according to any of the preceding claims, **characterised in that** said groove (3) develops linearly on the face of said first plate (211) drawing an "M" shape.

4. The generator according to any of the preceding claims, **characterised in that** it comprises:
- a scrubber (4) positioned downstream of said cell (2);
- a first conduit (41) that connects the cell (2) and the scrubber (4) for introducing into the scrubber (4) a mixture of oxyhydrogen and vapour, said vapour being able to be at least partially condensed in water;
- an oxyhydrogen outlet conduit (42) from the scrubber (4);
- connection means (81) for the cell (2) with a water inlet door into the generator or a water tank (82); the connection means (81) fluid dynamically connecting the cell (2) with said door or said tank (82) without necessarily transiting through the scrubber (4).

5. The generator according to claim 4, **characterised in that** it comprises a recovery conduit (43) of the water that starting from the scrubber (4) enables the reintroduction of water into said cell (2);
said scrubber (4) in turn comprising:
i) a level sensor (431) which once a predetermined threshold is reached, activates a recovery pump (432) for the water positioned along said recovery conduit (43) so as to send back into the cell (2) a part of the water present in the scrubber;
ii) a conduit (46) made of electrically insulating material that connects said sensor (431) to a first compartment (48) within the scrubber (4).

6. The generator according to claim 5, **characterised in that** said recovery conduit (43) reintroduces the water recovered from the scrubber (4) into a loading conduit (810) of said cell (2), said loading conduit (810) being part of said connection means (81).

7. The generator according to claim 5 or 6, **characterised in that** said scrubber (4) comprises:
- a second compartment (49) positioned above the first compartment (48);
- a perforated wall (40) that separates the first and the second compartment (48, 49);
said oxyhydrogen outlet conduit (42) developing starting from the second compartment (49); said first conduit (41), said recovery conduit (43) and said conduit (46) made of electrically insulating material leading into said first compartment (48).

8. The generator according to claim 4 or 5 or 6 or 7, **characterised in that** it comprises:
- a dispenser (50) of the gas produced by the generator (1);
- a tank (6) for adding an additive to the oxyhydrogen, said tank (6) being downstream of the scrubber (4) and upstream of the dispenser (50).

9. The generator according to any of the preceding claims, **characterised in that** it comprises:
- a recirculation conduit (44) that takes the electrolytic solution present in the cell (2) to redirect it towards the cell (2);
- a recirculation pump (440) positioned along said recirculation conduit (44);
- a heat exchanger (45) positioned along said recirculation conduit (44) and that transfers the heat of the electrolytic solution that crosses it.

10. The generator according to any of the preceding claims, **characterised in that** it comprises inversion means of the polarity of the positive pole (24) and the negative pole (25).
